# EUROPÄISCHE PATENTSCHRIFT

(11) **EP 3 141 327 B1**
(45) Veröffentlichungstag und Bekanntmachung des Hinweises auf die Patenterteilung: **23.08.2017**
(21) Anmeldenummer: 16173071.8
(22) Anmeldetag: 06.06.2016
(51) Int. Cl.: B23F 23/12, B23G 1/38, B24B 53/08

(54) **VERFAHREN ZUM ABRICHTEN EINER MEHRGÄNGIGEN SCHLEIFSCHNECKE**
METHOD OF DRESSING A MULTI-THREAD GRINDING WORM
PROCÉDÉ D'AJUSTEMENT D'UNE MEULE AVEC FILET À PAS MULTIPLES

(30) Priorität: 10.07.2015 DE 102015008962
(43) Veröffentlichungstag der Anmeldung: 15.03.2017
(73) Patentinhaber: Liebherr-Verzahntechnik GmbH, 87437 Kempten (DE)
(72) Erfinder: Mundt, Dr. Alois, 87435 Kempten (DE)
(74) Vertreter: Laufhütte, Dieter

(56) Entgegenhaltungen:
- EP-A2- 2 823 924
- DE-A1- 19 624 842
- DE-A1-102011 115 526

## Beschreibung

Die vorliegende Erfindung betrifft ein Verfahren zum Abrichten einer mehrgängigen Schleifschnecke. Ein derartiges Verfahren gemäß dem Oberbegriff des unabhängigen Anspruchs 1 ist z.B. aus dem Dokument DE 10 2011 115 526 A bekannt. Schleifschnecken finden insbesondere bei der Hartfeinbearbeitung von Zahnrädern Verwendung. Hierbei wird das Profil der Verzahnung durch das Abwälzen des zahnstangenförmigen Profils der Schleifschnecke auf dem Werkstück bearbeitet. Ein besonders wirtschaftliches Verfahren zum Hartfeinbearbeiten von Zahnrädern mit der Schleifschnecke ist das kontinuierliche Wälzschleifen, bei dem mehrere Zähne des Werkstücks (Zahnradrohling) im Eingriff mit den Zähnen einer Schleifschnecke stehen.

Um eine Zahnflanke des Werkstücks von höchster Güte zu erzeugen, ist es notwendig die Schleifschnecke in wiederkehrenden Zyklen aufzubereiten. Hierbei werden die Konturen der Schneckengänge der Schleifschnecke in einem Abricht- und Profiliervorgang aufbereitet, in dem die Schneckengeometrie und die Schneidfähigkeit wieder hergestellt wird, sowie Zusetzungen durch Span-, Korn und Bindungsreste in den Porenräumen der Schleifscheibe entfernt werden, so dass mit der Schleifschnecke das gewünschte Werkstück bearbeitet werden kann. In der Praxis werden die Begriffe Abrichten und Profilieren synonym verwendet, wobei im Folgenden nur noch vom Abrichten gesprochen wird, das auch das Profilieren und Schärfen mit umfasst.

Dieser Abrichtvorgang wird abhängig vom Abnutzungsgrad der Schleifschnecke wiederholt. Ebenso kann die Schleifschnecke umprofiliert werden, wenn die Bearbeitung einer Verzahnungsserie beendet wurde und nun neue, ähnliche Werkstücke mit dem gleichen Schleifwerkzeug bearbeitet werden sollen. Dazu kann die Schnecke durch einen Abrichtvorgang an die neuen Verzahnungsdaten angepasst werden.

Typischerweise wird als Abrichtwerkzeug ein diamantbeschichtetes Werkzeug verwendet, da mit diesem bei einer optimalen geometrischen Auslegung eine hohe Fertigungsqualität und eine niedrige thermische Beanspruchung des Schleifwerkzeugs erzielt werden kann. Je nach Aufgabenstellung gibt es verschiedene Abrichtwerkzeuge zur Bearbeitung unterschiedlicher Konturbereiche der Schleifwerkzeuge. Neben Formrollen die nur kleine Teilflächen am Schleifwerkzeug abrichten, werden Abrichtscheiben und Profilrollen eingesetzt, welche gleichzeitig die Flanken sowie die Kopf- und Fußbereiche an der Schleifschnecke abrichten können.

Beim Abrichten von Schleifschnecken werden die Flanken der einzelnen Schneckengänge mittels rotierender Abrichtwerkzeuge profiliert. Das gewünschte Zahnflankenprofil der Schleifschnecke wird durch den Abrichtprozess von dem Abrichtwerkzeug auf die Schleifschnecke übertragen bzw. durch eine gezielte Bewegung des Abrichtwerkzeugs relativ zur Schleifschnecke erzeugt. Zahnradparameter wie Profilballigkeiten, Kopf- und Fußrücknahmen werden dabei häufig bei der Auslegung der Abrichtwerkzeuge schon im Abrichtwerkzeug abgebildet und durch den Abrichtprozess auf die Schleifschnecke übertragen. Dies führt dazu, dass diese Werkzeuge häufig an eine bestimmte Verzahnung gebunden sind und andere Verzahnungen damit nur bedingt zu bearbeiten sind. Die Abrichtwerkzeuge bestehen dabei üblicherweise aus einem Stahlgrundkörper der im Bereich des Zahnprofils mit Diamantkörnern beschichtet ist. Der Kopfbereich des Abrichters wird häufig mit Diamantnadeln verstärkt, da dieser Bereich beim Abrichten besonders stark verschleißt und gerade bei kleinem Modul nur einen geringen Radius aufweist.

Bei der Fertigung von kleinmoduligen Zahnrädern, ist die Standzeit der Abrichtwerkzeuge aufgrund ihrer geringen Zahnbreite vor allem im Kopfbereich des Abrichters deutlich reduziert. Eine weitere Einflussgröße beim Abrichtvorgang der Schleifschnecke durch ein Abrichtwerkzeug stellt die Losgröße des herzustellenden Zahnrads dar. Je kleiner die Losgröße, also die Gesamtanzahl der zu fertigenden Zahnräder ist, desto inneffektiver ist die Beschaffung eines eigens für eine spezielle Verzahnung angepassten Abrichtwerkzeuges.

Der Erfindung liegt daher die Aufgabe zugrunde ein Verfahren zu schaffen, bei dem eine Standzeit eines Abrichtwerkzeugs für kleine Module beim Wälzschleifen erhöht wird. Gleichzeitig soll es mit dem Verfahren auch mit nicht exakt passenden Abrichtwerkzeugen (z.B. zu großer Modul) trotzdem möglich sein, verschiedene Zahnflankengeometrien an der Schleifschnecke auch bei kleinen Losgrößen besonders wirtschaftlich zu bearbeiten bzw. die Bearbeitung dieser Verzahnung mit diesem Schleifwerkzeug überhaupt zu ermöglichen. Manchmal hat die Möglichkeit eine Kleinserie von Verzahnungen überhaupt bearbeiten zu können, deutlich mehr Gewicht, als die Maßgabe dieses auch besonders wirtschaftlich durchzuführen, wofür dann ein teures Abrichtwerkzeug mit langer Lieferzeit zunächst erst einmal beschafft werden muss, bevor überhaupt mit der Bearbeitung begonnen werden kann.

Diese Aufgaben werden durch das Verfahren zum Abrichten einer mehrgängigen Schleifschnecke nach Anspruch 1 gelöst.

Das Schleifwerkzeug für dieses Verfahren wird zunächst wie ein mehrgängiges, wenigsten zweigängiges Werkzeug, ausgelegt. Beim Abrichten wird nun eine Flanke eines jeweils ersten Schneckengangs der mehrgängigen Schleifschnecke mittels eines Abrichtwerkzeugs bearbeitet. In einem zweiten Schritt wird anschließend die gegenüberliegende eines zweiten oder mehrfachen Schneckengangs am Werkzeug bearbeitet, je nachdem wieviel Gänge ausgespart werden. Das Verfahren ist dadurch gekennzeichnet, dass beim Bearbeiten der Schleifschnecke mindestens einer der mehreren Schneckengänge der Schleifschnecke eliminiert oder reduziert wird, sodass sich die tatsächlich wirksame Ganganzahl der Schleifschnecke wieder verringert.

Bei der Werkstückbearbeitung hingegen muss dann wieder die Mehrgängigkeit von der Basisauslegung berücksichtigt werden. So muss z.B. bei einer gemäß der Auslegung zweigängigen Schnecke, das Werkstück mit zwei Schleifhüben bearbeitet werden, da sonst Teilbereiche oder Zähne nicht bearbeitet werden, die ursprünglich von dem zweiten Schneckengang oder der zweiten Schleifschneckenflanke bearbeitet worden wären. Vor allem da Schleifschnecken die nach diesem Verfahren abgerichtet wurden, das Werkstück nur einflankig bearbeiten, noch dazu an verschiedenen aufeinanderfolgenden Zähnen.

Die mehrgängige Schleifschnecke enthält mindestens zwei Gänge, wobei die verschiedenen Gänge durch eine jeweilige Erhöhung (Zahn der Schnecke) voneinander getrennt sind. In dem Verfahren zum Abrichten der Schleifschnecken werden mindestens zwei aneinander angrenzende Schneckengänge, die typischerweise wendelförmig parallel nebeneinander verlaufen, zu einem Schneckengang zusammengefasst, indem das die beiden Schneckengänge trennende Element gegenüber der Originalflanke in der Zahnbreite und/oder Zahnhöhe zurückgesetzt wird. Zurücksetzen bedeutet in diesem Zusammenhang, dass das die beiden Schneckengänge voneinander trennende Element (ein Zahn der Schnecke) mithilfe des Abrichtwerkzeugs abgetragen und/oder abgeschliffen wird, sodass sich dieser Zahn bei der Werkstückbearbeitung nicht mehr im Eingriff befindet und am Werkstück kein Material abträgt. Im Extremfall wird dieser Zahn soweit zurückgesetzt das von ihm nichts mehr bestehen bleibt.

Dieses Zurücksetzten kann auch nur über einem Teilbereich der Schneckenbreite erfolgen wodurch sich die Ganganzahl der Schleifschnecke zumindest nur in einem Teilbereich der Schleifschnecke verringert, z. B. wenn die Schnecke nicht über ihre gesamten Breite genutzt wird oder bei Aufteilung des Schleifwerkzeuges in einen Schrupp-Schlichtbereich. So kann z.B. im Schruppbereich mit einem nicht genau passenden Abrichter die Schleifschnecke so aufbereitet werden, dass alle Schneckengänge genutzt werden dafür aber nur Teile der Zahnhöhe bearbeitet werden. Erst im Schlichtbereich, mit dem dann die Werkstückqualität erzeugt wird, wird das Schleifwerkzeug so abgerichtet das es die geforderte Qualität auch erzeugt und dabei dann mit ausgesparten Gängen an der Schleifschnecke die gesamte Zahnhöhe bearbeitet wird.

Hierbei kann es für die Zwecke der Erfindung ausreichend sein, wenn das die zu vereinigenden Schneckengänge voneinander trennende Element im Vergleich zu seiner ursprünglichen Höhe zu 80%, vorzugsweise zu 90% und besonders bevorzugt zu 100% abgetragen wird. Die ursprüngliche Höhe wird ausgehend vom Zahnfuß des Schneckengangs bestimmt.

Vorteilhaft an diesem Verfahren ist, dass beim Abrichten nicht zwingenderweise ein auf die Zahnlücke des Schneckengangs abgestimmtes Abrichtwerkzeug verwendet werden muss, sondern ein in seinem Aufbau breiterer Universalabrichter Verwendung finden kann, dessen Standzeit und Lebensdauer in Bezug auf den auf die Zahnlücke abgestimmten Abrichter vorteilhaft ist. Zudem führt die Verwendung eines Universalabrichters, der nicht optimal auf die mehrgängige Schleifschnecke abgestimmt ist, bei der Fertigung von kleinmoduligen Zahnrädern dazu, dass weder Abrichter noch die Schleifschnecke bei jeder Veränderung der Zahnradgröße oder Zahnradgeometrie des zu fertigenden Zahnrads geändert werden muss. Insbesondere bei geringen Losgrößen stellt dies einen erheblichen Vorteil dar, da hierbei der Wechsel und die Auswahl eines passenden Abrichters und/oder einer Schleifschnecke einen besonders großen Einfluss auf die Standzeit haben. Ferner ist es nun nicht mehr zwingend notwendig für jede der zu fertigenden Zahnradcharakteristika einen separaten Abrichter vorzuhalten. Die Gesamtanzahl der Abrichter kann somit stark reduziert werden.

Im Unterschied zum Stand der Technik wird also nicht lediglich die Kontur einer Flanke eines Schneckengangs bearbeitet, sondern die Charakteristik der Schleifschnecke grundlegend verändert, indem die Gangzahl der Schleifschnecke verringert wird.

Nach einem weiteren vorteilhaften Merkmal der vorliegenden Erfindung weist das Abrichtwerkzeug zum Bearbeiten des Schneckengangs eine Zahnbreite auf, die größer als die Zahnlückenbreite des Schneckengangs ist. Weiterhin ist es möglich dass das Abrichtwerkzeug zur Erzeugung bestimmter Modifikationen auf einer Schneckenflanke in der Schneckenlücke geschwenkt wird und so in seiner Wirkung breiter wird und damit die Gegenflanke in der Schneckenlücke mit abgerichtet bzw. eigentlich unzulässig verändert wird. Durch Zurücksetzen dieser Gegenflanke kann diese in der Bearbeitung außer Eingriff gebracht werden. Vorzugsweise ist die Zahnbreite des Abrichtwerkzeugs größer als 110 % der Zahnlückenbreite des Schneckengangs, bevorzugterweise größer als 125 % der Zahnlückenbreite des Schneckengangs und besonders bevorzugt größer als 150 % der Zahnlückenbreite des Schneckengangs.

Die breitere Ausführung des Abrichtwerkzeugs führt zu einer längeren Lebensdauer des Abrichtwerkzeugs, da das Abrichtwerkzeug vor allem am Zahnkopf stabiler ausgelegt werden kann und somit eine größere Steifigkeit aufweist bzw. öfter nachgeschliffen werden kann, da dafür mehr Material zu Verfügung steht. Somit kann der Abrichter wiederum länger eingesetzt werden.

Nach einer weiteren vorteilhaften Ausführungsform des vorliegenden erfindungsgemäßen Verfahrens wird das Abrichtwerkzeug bündig an eine Flanke des Schneckengangs angesetzt und trägt beim Bearbeiten die entsprechende andere Flanke des Schneckengangs teilweise oder vollständig ab.

Ein Schneckengang ist eine wendelförmig oder schraubenförmig verlaufende Vertiefung in einen im Wesentlichen zylindrischen Körper, der zwei zueinander zugewandte Flanken und einen diese Flanken verbindenden Zahnfuß aufweist.

Nach der Ausführungsform dieses Verfahrens wird das Abrichtwerkzeug bündig an eine der beiden Flanken eines Schneckengangs angesetzt, wodurch gleichzeitig die entsprechende andere Flanke des Schneckengangs durch das Abrichtwerkzeug teilweise oder vollständig abgetragen wird. Dies bedeutet, dass das Abrichtwerkzeug bzw. die Zahnbreite des in dem Schneckengang eingeführten Elements des Abrichtwerkzeugs an mindestens einem Punkt breiter ist als der Schneckengang der Schleifschnecke (gemessen in Längsrichtung der Schleifschnecke).

Vorteilhaft an diesem Verfahren ist, dass in nur einem Arbeitsgang eine der beiden Flanken eines Schneckengangs abgerichtet wird und gleichzeitig das Eliminieren eines der mehreren Schneckengänge der Schleifschnecke vorangetrieben oder umgesetzt wird.

Vorzugsweise wird hierbei nachfolgend das Abrichtwerkzeug in einem zur abgetragenen Flanke angrenzenden Schneckengang an eine der abgetragenen Flanke zugewandten Flanke bündig angesetzt. Es wird also hierbei der Zahn der Schleifschnecke, der die beiden Schneckengänge voneinander trennt an seinen beiden Flanken abgetragen. Selbstverständlich ist jedoch auch möglich, dass dieser Zahn bereits beim Abrichtvorgang, der auf das erste Ansetzen des Abrichtwerkzeugs folgt, vollständig abgetragen worden ist. Dann wird lediglich die zweite Flanke des nun verbreiteten Schneckengangs abgerichtet. Wird der Zahn, der beide miteinander zu verbindende Schneckengänge trennt, in einen ersten Schritt jedoch nicht vollständig abgetragen, so wird dieser Zahn nun aus Richtung der noch nicht abgetragenen Zahnflanke zurückgesetzt. Es wird also zuerst durch das Abrichtwerkzeug ein Teil des die beiden Schneckengänge trennenden Zahns an einer Flanke abgetragen und in einem weiteren Schritt der restliche Zahn aus Richtung der anderen Flanke abgetragen, wenn das Abrichtwerkzeug den angrenzenden Schneckengang, der nach Ausführung des Vorgangs einen Teil eines vergrößerten Schneckengangs bildet, bearbeitet.

Dieses Verfahren hat den Vorteil, dass mit nur zwei Arbeitsschritten jeweils eine rechte und linke Flanke des neu geschaffenen Schneckengangs abgerichtet werden können und dabei gleichzeitig ein Schneckengang eliminiert oder gegenüber seiner Originalflanke zurückgesetzt wird.

Vorzugsweise wird nach einem weiteren vorteilhaften Merkmal des Verfahrens beim Bearbeiten des Schneckengangs der Zahnfuß des Schneckengangs durch das Abrichtwerkzeug abgetragen.

Dies kann von Vorteil sein, da bei einer spezifischen Ausgestaltung des Abrichtwerkzeugs nur bei einem Abtragen des Zahnfußes des Schneckengangs ein zweiflankiges Abrichten der beiden Flanken, die den neuen verbreiterten Schneckengang definieren, möglich ist. Die Eintauchtiefe des Abrichtwerkzeugs ist hier zwar tiefer als der Zahnfuß der Schleifschnecke, jedoch wird der Zahnfuß bei einem Wälzschleifen häufig nicht mitbearbeitet, sodass hier nur die Flanken zum Einsatz kommen. Demnach ist es für die Verfahrenseffektivität von Vorteil, wenn der Zahnfuß abgetragen werden kann, sodass der Abrichter ein zweiflankiges Abrichten ermöglicht.

Weiter vorteilhaft ist es möglich, dass nur ein Teilbereich der Schleifschnecke nach dem erfindungsgemäßen Verfahren zum Bearbeiten des Schneckengangs bearbeitet wird.

Vorzugsweise ist mit Teilbereich ein sich nicht über die gesamte Länge der Schleifschnecke erstreckender Abschnitt eines Schneckengangs gemeint, in dem die erfindungsgemäße Bearbeitung ausgeführt wird.

Dies ist vorteilhaft, wenn nicht die komplette Schleifschneckenbreite zum Fertigen, insbesondere zum Wälzschleifen, des zu fertigenden Zahnrads benötigt wird.

Darüber hinaus ist es für das Verfahren der Erfindung weiter von Vorteil, wenn das Abrichtwerkzeug ein Doppelabrichter ist, der dieselbe und/oder verschiedene Flanke eines oder verschiedener Schneckengänge an verschiedenen Positionen gleichzeitig bearbeiten kann. Vorzugsweise sind die gleichzeitig zu bearbeitenden Flanken in ihrer Ausrichtung identisch zueinander.

Dadurch verringert sich die zum Abrichten benötigte Zeit der mehrgängigen Schleifschnecke.

Die Erfindung soll nachstehend anhand von detailliert beschriebenen Zeichnungen näher erläutert werden. In den Zeichnungen zeigen:
- Fig. 1: den Ursprungszustand einer mehrgängigen Schleifschnecke und den Zustand nach Bearbeitung mit dem erfindungsgemäßen Verfahren,
- Fig. 2: das Abrichten einer mehrgängigen Schleifschnecke,
- Fig. 3: eine Prinzipdarstellung bei der Ausführung des erfindungsgemäßen Verfahrens,
- Fig. 4: eine Prinzipdarstellung bei der Ausführung des erfindungsgemäßen Verfahrens, und
- Fig. 5a-c: drei Varianten von im Stand der Technik bekannten Verfahren zum Abrichten einer Schleifschnecke.

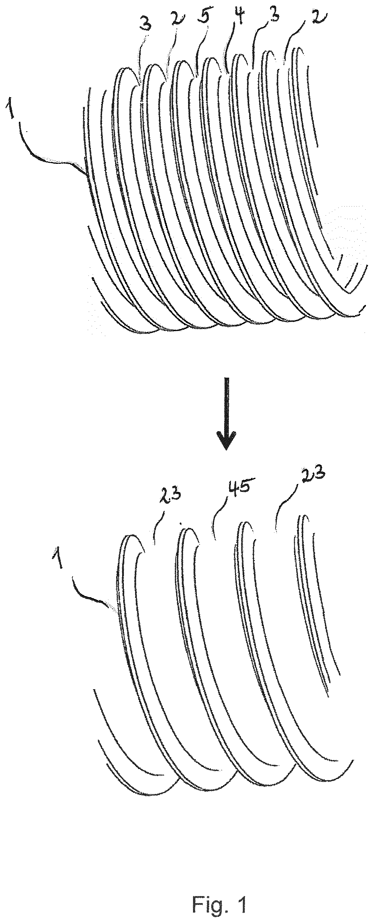

Fig. 1 zeigt im oberen Teil der Figur eine mehrgängige Schleifschnecke 1, die insgesamt vier Schneckengänge 2, 3, 4, 5 aufweist. Die einzelnen Schneckengänge 2, 3, 4, 5 sind durch jeweilige zwischen den angrenzenden Schneckengängen 2, 3, 4, 5 angeordnete Zähne voneinander getrennt.

Nach Anwenden des erfindungsgemäßen Verfahrens nach Anspruch 1 hat sich die Ganganzahl von vormals vier auf den Wert 2 verringert. Dies ist in der Schleifschnecke im unteren Bereich der Fig. 1 deutlich zu sehen. So sind die vormals voneinander getrennten Schneckengänge 2, 3 nun zu einem gemeinsamen Schneckengang 23 zusammengefasst. Selbiges gilt für die vormals voneinander getrennten Schneckengänge 4 und 5, die nun ebenfalls einen gemeinsamen Schneckengang 45 bilden.

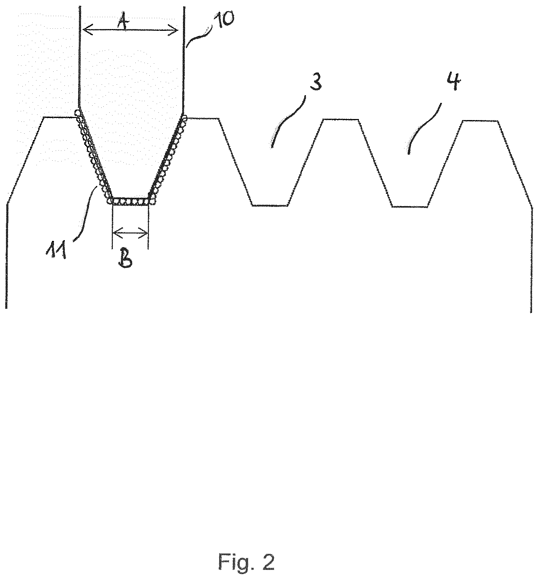

Fig. 2 zeigt das zweiflankige Abrichten einer mehrgängigen Schleifschnecke für ein Abrichtwerkzeug, dass auf dem Gang einer Schleifschnecke perfekt abgestimmt ist. So stimmt die Breite A des Abrichtwerkzeugs 10 mit dem Abstand der beiden entsprechenden Flanken am Zahnkopf überein. Zudem ist die Breite B des Abrichtwerkzeugs 10 an seinem Zahnkopf an die Breite des Zahnfußes des Schneckengangs angepasst. Typischerweise weist das Abrichtwerkzeug 10 an den mit der Schleifschnecke in Kontakt kommenden Bereichen eine Diamantbesetzung 11 auf.

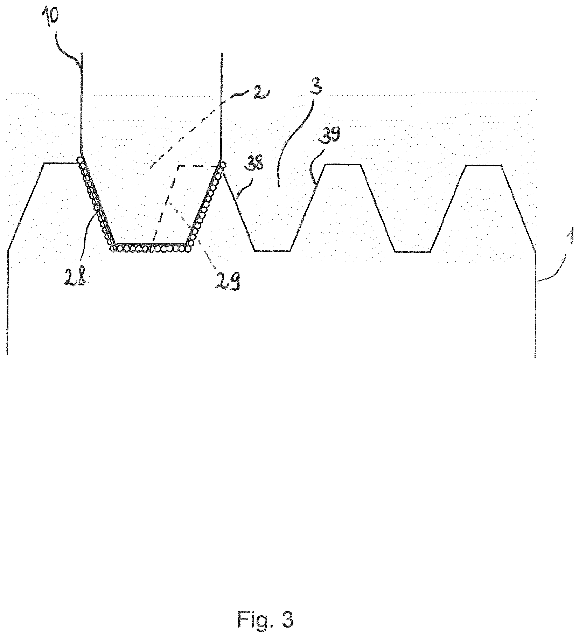

Fig. 3 zeigt ein Prinzipbild von einem Abrichtwerkzeug 10 und einer Schleifschnecke 1 während der Anwendung des erfindungsgemäßen Verfahrens zum Abrichten eine ersten Gangs der Schleifschnecke 1. So liegt die eine Flanke des Abrichtwerkzeugs 10 bündig an einer Flanke 28 des Schneckengangs 2 und der Zahn, der den Schneckengang 2 von dem Schneckengang 3 trennt, wurde bereits teilweise abgetragen (gestrichelte Darstellung nahe Bezugszeichen 29).

In einem zweiten Schritt wird dann die der Zahnflanke 28 gegenüberliegende Zahnflanke 39 im nächsten Gang abgerichtet und dabei der die Schneckengänge 2, 3 trennende Zahn abgetragen oder zurückgesetzt.. Dies wird ausgeführt, indem das Abrichtwerkzeug 10 an die Flanke 39 des Schneckengangs 3 angesetzt wird, wodurch der vormals die beiden Schneckengänge 2, 3 verbindende Zahn mit seinen beiden Flanken 29 und 38 eliminiert oder zurückgesetzt wird. Hierbei ist von Vorteil, dass ein nicht auf die Breite der Zahnlücke in der Schleifschnecke 1 abgestimmtes Abrichtwerkzeug 10 eingesetzt werden kann. Dies erhöht die Flexibilität bei der Auswahl der zur Verfügung stehenden Abrichtwerkzeuge 10, sodass nicht zwangsläufig ein Abrichtwerkzeug 10 vonnöten ist, das auf einen bestimmten Zahnlückenabstand abgestimmt ist. Insgesamt kann somit die Anzahl der vorzuhaltenden Abrichtwerkzeuge reduziert werden.

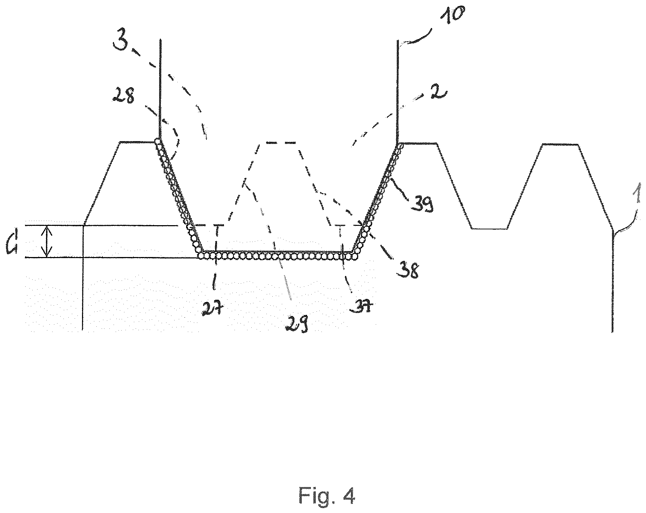

Fig. 4 zeigt einen weiteren Fall des erfindungsgemäßen Verfahrens zum Abrichten einer mehrgängigen Schleifschnecke 1, bei dem in einem Arbeitsgang beide Flanken 28, 39 mit dem Abrichter 10 abgerichtet werden können. In der Figur ist erneut der vormals die beiden Schneckengänge trennende Zahn gestrichelt dargestellt. Darüber hinaus erkennt man, dass die Eintauchtiefe des Abrichtwerkzeugs 10 so groß ist, dass der ursprüngliche Zahnfuß der Schneckengänge 2, 3 um den Betrag C abgetragen worden ist. Das Abtragen des Zahnfußes kann problemlos möglich sein, da beim Wälzschleifen häufig nur die Flanken der Schleifschnecke benötigt werden und der Zahnfuß der Zahnlücken am Werkstück nicht mitgeschliffen wird.

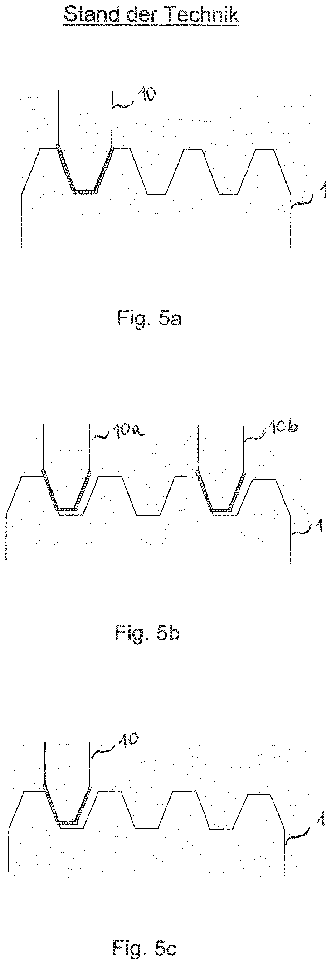

Fig. 5a bis Fig. 5c zeigen verschiedene Abrichtverfahren nach dem Stand der Technik.

In Fig. 5a ist ein Abrichtwerkzeug 10 zu erkennen, dass bündig in die Zahnlücke des Schneckengangs der Schleifschnecke 1 passt. Dabei ist ein zweiflankiges Abrichten des Schneckengangs möglich.

Fig. 5b zeigt einen Doppelabrichter mit seinen beiden Abrichtwerkzeugen 10a, 10b, der die Schleifschnecke 1 einflankig abrichtet.

Fig. 5c zeigt ein einflankiges Abrichten durch ein Abrichtwerkzeug 10, dessen Breite geringer ist als die Zahnlückenbreite des Schneckengangs.

## Patentansprüche

1. Verfahren zum Abrichten einer mehrgängigen Schleifschnecke (1), umfassend:
Bearbeiten eines Schneckengangs (2, 3, 4, 5) der mehrgängigen Schleifschnecke (1) mittels eines Abrichtwerkzeugs (10),
**dadurch gekennzeichnet, dass**
beim Bearbeiten mindestens einer der mehreren Schneckengänge (2, 3, 4, 5) der Schleifschnecke (1) gegenüber der Originalflanke in der Zahnbreite und/oder Zahnhöhe zurückgesetzt wird, so dass sich die Ganganzahl der Schleifschnecke (1) verringert.

2. Verfahren nach Anspruch 1, wobei das Abrichtwerkzeug (10) eine Zahnbreite aufweist, die größer als die Zahnlückenbreite des Schneckengangs (2, 3, 4, 5) ist, vorzugsweise größer als 110% der Zahnlückenbreite des Schneckengangs (2, 3, 4, 5), bevorzugterweise größer als 125% der Zahnlückenbreite des Schneckengangs (2, 3, 4, 5) und besonders bevorzugt größer als 150% der Zahnlückenbreite des Schneckengangs (2, 3, 4, 5).

3. Verfahren nach einem der vorhergehenden Ansprüche, wobei das Abrichtwerkzeug (10) bündig an eine Flanke (28) des Schneckengangs (2) angesetzt wird und beim Bearbeiten die entsprechende andere Flanke (29) des Schneckengangs (2) teilweise oder vollständig abträgt.

4. Verfahren nach Anspruch 3, wobei nachfolgend das Abrichtwerkzeug (10) in einem zur abgetragenen Flanke (29) angrenzenden Schneckengang (3) an eine der abgetragenen Flanke (29) zugewandten Flanke (39) bündig angesetzt wird.

5. Verfahren nach einem der vorhergehenden Ansprüche, wobei beim Bearbeiten des Schneckengangs (2, 3, 4, 5) der Zahnfuß des Schneckengangs (27, 37) durch das Abrichtwerkzeug (10) abgetragen wird.

6. Verfahren nach einem der vorhergehenden Ansprüche, wobei beim Bearbeiten des Schneckengangs (2, 3, 4, 5) nur ein Teilbereich der Schleifschnecke (1) bearbeitet wird.

7. Verfahren nach einem der vorhergehenden Ansprüche, wobei das Abrichtwerkzeug (10) ein Doppelabrichter ist, der zwei verschiedene Flanken einer Schleifschneke (1) auf einmal bearbeiten kann.

8. Verfahren nach einem der vorhergehenden Ansprüche, wobei beim Bearbeiten des Schneckengangs (2, 3, 4, 5) das Abrichtwerkzeug auf einer Schneckenflanke in der Schneckenlücke geschwenkt wird, damit die Gegenflanke in der Schneckenlücke mit abgerichtet wird.

## Claims

1. A method for dressing a multithread grinding worm (1), comprising:
machining of a flight (2, 3, 4, 5) of the multithread grinding worm (1) by means of a dressing tool (10),
**characterized in that**
during machining at least one of the plurality of flights (2, 3, 4, 5) of the grinding worm (1) is set back with respect to the original flank in terms of tooth width and/or tooth height, so that the number of flights of the grinding worm (1) is reduced.

2. The method according to claim 1, wherein the dressing tool (10) has a tooth width which is greater than the tooth gap width of the flight (2, 3, 4, 5), preferably greater than 110% of the tooth gap width of the flight (2, 3, 4, 5), more preferably greater than 125% of the tooth gap width of the flight (2, 3, 4, 5), and particularly preferably greater than 150% of the tooth gap width of the flight (2, 3, 4, 5).

3. The method according to any of the preceding claims, wherein the dressing tool (10) is applied flush to a flank (28) of the flight (2) and during machining partly or completely removes the corresponding other flank (29) of the flight (2).

4. The method according to claim 3, wherein the dressing tool (10) subsequently is applied flush to a flank (39) facing the removed flank (29) in a flight (3) adjacent to the removed flank (29).

5. The method according to any of the preceding claims, wherein during machining of the flight (2, 3, 4, 5) the tooth base of the flight (27, 37) is removed by the dressing tool (10).

6. The method according to any of the preceding claims, wherein during machining of the flight (2, 3, 4, 5) only a partial region of the grinding worm (1) is machined.

7. The method according to any of the preceding claims, wherein the dressing tool (10) is a double dresser which is able to machine two different flanks of a grinding worm (1) at one time.

8. The method according to any of the preceding claims, wherein during machining of the flight (2, 3, 4, 5) the dressing tool is pivoted on a worm flank in the worm gap, so that the counter flank also is dressed in the worm gap.

## Revendications

1. Procédé pour dresser une vis sans fin de meulage (1) à plusieurs filets, comportant :
l'usinage d'un filet (2, 3, 4, 5) de la vis sans fin de meulage (1) à plusieurs filets au moyen d'un outil de dressage (10),
**caractérisé en ce que**
pendant l'usinage au moins un des plusieurs filets (2, 3, 4, 5) de la vis sans fin de meulage (1) est remis par rapport au flanc original dans la largeur de dent et/ou hauteur de dent, de sorte que le nombre de filets de la vis sans fin de meulage (1) est réduit.

2. Procédé selon la revendication 1, dans lequel l'outil de dressage (10) possède une largeur de dent, qui est plus grande que la largeur de l'entredent du filet (2, 3, 4, 5), de préférence supérieure à 110 % de la largeur de l'entredent du filet (2, 3, 4, 5), plus préférablement supérieure à 125% de la largeur de l'entredent du filet (2, 3, 4, 5), et de manière particulièrement préférable supérieure à 150% de la largeur de l'entredent du filet (2, 3, 4, 5).

3. Procédé selon l'une quelconque des revendications précédentes, dans lequel l'outil de dressage (10) est appliqué affleurant un flanc (28) du filet (2), and pendant l'usinage enlève partiellement ou complètement l'autre flanc (29) correspondant du filet (2).

4. Procédé selon la revendication 3, dans lequel l'outil de dressage (10) ensuite est appliqué affleurant un flanc (39) tourné vers le flanc (29) enlevé dans un filet (3) adjacent au flanc (29) enlevé.

5. Procédé selon l'une quelconque des revendications précédentes, dans lequel pendant l'usinage du filet (2, 3, 4, 5) le pied de dent du filet (27, 37) est enlevé par l'outil de dressage (10).

6. Procédé selon l'une quelconque des revendications précédentes, dans lequel pendant l'usinage du filet (2, 3, 4, 5) seulement une zone partielle de la vis sans fin de meulage (1) est usinée.

7. Procédé selon l'une quelconque des revendications précédentes, dans lequel l'outil de dressage (10) est un dresseur double, qui peut usiner deux flancs différents d'une vis sans fin de meulage (1) à la fois.

8. Procédé selon l'une quelconque des revendications précédentes, dans lequel pendant l'usinage du filet (2, 3, 4, 5) l'outil de dressage est pivoté sur un flanc de la vis sans fin dans le creux de la vis sans fin pour aussi dresser le contre-flanc dans le creux de la vis sans fin.
